# EUROPEAN PATENT SPECIFICATION

(11) **EP 3 180 811 B1**
(45) Date of publication and mention of the grant of the patent: **31.01.2018**
(21) Application number: 15847010.4
(22) Date of filing: 18.06.2015
(51) Int. Cl.: H01M 2/10

(54) **BATTERY ACCOMMODATING DEVICE AND BATTERY MODULE HAVING THE SAME**
BATTERIEAUFNAHMEVORRICHTUNG UND BATTERIEMODUL DAMIT
DISPOSITIF DE LOGEMENT DE BATTERIE ET MODULE DE BATTERIE COMPRENANT CELUI-CI

(30) Priority: 30.09.2014 CN 201410522215; 30.09.2014 CN 201420569533 U
(43) Date of publication of application: 21.06.2017
(73) Proprietor: BYD Company Limited, Shenzhen, Guangdong 518118 (CN)
(72) Inventor: ZHANG, Xuefeng, Shenzhen Guangdong 518118 (CN); ZHU, Yan, Shenzhen Guangdong 518118 (CN); PENG, Qingbo, Shenzhen Guangdong 518118 (CN); LU, Jia, Shenzhen Guangdong 518118 (CN); LIU, Wei, Shenzhen Guangdong 518118 (CN)
(74) Representative: Hoffmann Eitle
(86) International application number: PCT/CN2015/081870
(87) International publication number: WO 2016/050097

(56) References cited:
- WO-A1-01/84649
- WO-A1-2008/035872
- CN-A- 101 504 973
- CN-A- 103 887 460
- CN-U- 203 800 110
- CN-U- 203 800 110
- CN-U- 204 144 356
- DE-A1-102011 075 044
- JP-A- 2007 018 827
- US-A- 4 957 829

## Description

### CROSS-REFERENCE TO RELATED APPLICATION

The present application claims priority to and benefits of Chinese Patent Applications No. 201410522215.X and 201420569533.7, filed with the State Intellectual Property Office (SIPO) of the People's Republic of China on September 30, 2014.

### FIELD

Embodiments of the disclosure generally relate to batteries, and more particularly to a battery accommodating device and a battery module having the same.

### BACKGROUND

In the related art, a power battery module usually uses a battery accommodating device with a multi-plate assembling structure or an upper-lower shell assembling structure. Although the battery accommodating device with the aforementioned structure can provide a good protection for batteries, a combination of the batteries cannot be freely extended due to limitations of the multi-plate assembling structure and the upper-lower shell assembling structure. In detail, the aforementioned structure of the battery accommodating device is required to be redesigned if the combination of the batteries is changed, thus greatly increasing time and cost of R&D project. Meanwhile, the aforementioned structure of the battery accommodating device is not conducive to an automatic production of a power battery module, which potentially increases a production cost of the power battery module, thus causing the product to lose the competitive advantage. DE102011075044 discloses a battery accommodating device according to the preamble of claim 1.

### SUMMARY

In viewing thereof, the present disclosure is directed to solve at least one problem existing in the art. For this reason, the present disclosure provides a battery accommodating device, it is easy to extend and assemble the battery accommodating device.

The present disclosure also provides a battery module, the battery module shows a high expansibility, low R&D cost and short time for development.

Embodiments of a first aspect the present disclosure provide a battery accommodating device. The battery housing includes: an outer insertion-connected assembly including first and second outer insertion-connected components opposed to and spaced from each other in a right and left direction; an inner insertion-connected assembly disposed between the first and second outer insertion-connected components in the right and left direction, and including first and second inner insertion-connected components staggerly arranged with each other in a front and rear direction; and a chamber configured to accommodate a battery and defined between the inner insertion-connected component of the inner insertion-connected assembly and adjacent one of the first and second outer insertion-connected components, in which each of the first and second outer insertion-connected components is fitted with the first and second inner insertion-connected components via a sliding rail structure.

In some embodiments, a plurality of inner insertion-connected assemblies are disposed between the first and second outer insertion-connected components, in which the chamber is further defined between adjacent inner insertion-connected assemblies, and adjacent inner insertion-connected components are fitted with each other via the sliding rail structure.

In some embodiments, each of the first and second outer insertion-connected components has a sliding groove or a sliding block, in which each of the first and second inner insertion-connected components has a sliding groove in a left side thereof and a sliding block on a right side thereof, in which the sliding groove of the inner insertion-connected component is adapted to fit with the sliding block of the outer insertion-connected component or the sliding block of an adjacent inner insertion-connected component.

In some embodiments, the outer insertion-connected component includes: an outer side plate having a first plate segment and a second plate segment; and an insertion-connected frame disposed on the first plate segment of the outer side plate, in which the first inner insertion-connected component of the inner insertion-connected assembly adjacent to the outer insertion-connected component, is connected with the second plate segment of the outer side plate and opposed to the insertion-connected frame; in which the second inner insertion-connected component of the inner insertion-connected assembly adjacent to the outer insertion-connected component, is connected with a side of the insertion-connected frame away from the outer side plate.

In some embodiments, the insertion-connected frame includes: an outer top plate connected with a top of the outer side plate and perpendicular thereto, an outer end plate connected with an end of the first plate segment of the outer side plate away from the second plate segment and perpendicular thereto; and an outer bottom plate connected with a bottom of the outer side plate and perpendicular thereto, and opposed to the outer top plate.

In some embodiments, each of the outer top plate and the outer bottom plate has a sliding groove or a sliding block at a side thereof away from the outer side plate, and the sliding groove or the sliding block is adapted to fit with the second inner insertion-connected component of the inner insertion-connected assembly adjacent to the outer insertion-connected component.

In some embodiments, each of the outer top plate and the outer bottom plate has the sliding groove at the side thereof away from the outer side plate, and the sliding groove is adapted to fit with the second inner insertion-connected component of the inner insertion-connected assembly adjacent to the outer insertion-connected component, and the sliding groove of the outer top plate is opened in a first direction opposite to a second direction in which the sliding groove of the outer bottom plate is opened.

In some embodiments, the second plate segment of the outer side plate has a sliding groove or a sliding block at a top and a bottom thereof respectively, and the sliding groove or the sliding block is adapted to fit with the first inner insertion-connected component of the inner insertion-connected assembly adjacent to the outer insertion-connected component.

In some embodiments, the second plate segment of the outer side plate has the sliding block at the top and the bottom thereof respectively, the sliding block is adapted to fit with the first inner insertion-connected component of the inner insertion-connected assembly adjacent to the outer insertion-connected component, and the sliding block at the top of the second plate segment has an extending direction opposed to that of the sliding block at the bottom of the second plate segment.

In some embodiments, the outer end plate defines a first extraction hole penetrated therethrough.

In some embodiments, the inner insertion-connected component includes: an inner top plate having a sliding groove at a left side thereof and a sliding block at a right side thereof, the sliding groove and the sliding block being adapted to fit with the outer insertion-connected component or the inner insertion-connected component adjacent thereto respectively; an inner end plate disposed at a front end or a rear end of the inner top plate and perpendicular thereto; an inner bottom plate disposed at a lower end of the inner end plate and perpendicular thereto, having a sliding groove at a left side thereof and a sliding block at a right side thereof, the sliding groove and the sliding block being adapted to fit with the outer insertion-connected component or the inner insertion-connected component adjacent thereto; and an inner baffle plate disposed at the left side or the right side of the inner top plate and perpendicular thereto, and connected with the inner end plate and the inner bottom plate.

In some embodiments, an extending direction of the sliding block of the inner top plate is opposite to that of the sliding block of the inner bottom plate, and the sliding groove of the inner top plate is opened in a first direction opposite to a second direction in which the sliding groove of the inner bottom plate is opened.

In some embodiments, the inner end plate defines a second extraction hole penetrated therethrough.

In some embodiments, the inner baffle plate defines a notch opened in a direction away from the inner end plate.

In some embodiments, the battery accommodating device further includes a plurality of protective covers, in which the protective cover is disposed at an end of the inner insertion-connected component adjacent to the inner end plate thereof and/or an end of the outer insertion-connected component adjacent to the outer end plate thereof.

In some embodiments, the inner top plate of the inner insertion-connected component or the outer top plate of the outer insertion-connected component defines a slot; the protective cover has a snap component adapted to fit within the slot at an upper end thereof, and a flange adapted to fit with the outer end plate or the inner end plate at a lower end thereof.

In some embodiments, the protective cover disposed at the end of the outer insertion-connected component has a first package edge adapted to fit with an outermost side of the outer insertion-connected component.

In some embodiments, the battery accommodating device further includes a mounting assembly, in which the mounting assembly is configured to connect the outer insertion-connected component with the inner insertion-connected component adjacent thereto, or connect adjacent inner insertion-connected components with each other.

In some embodiments, the mounting assembly includes: a first mounting component configured to connect the outer insertion-connected component with the first inner insertion-connected component of the inner insertion-connected assembly adjacent to the outer insertion-connected component; and a second mounting component configured to connect four adjacent inner insertion-connected components together or adjacent three inner insertion-connected components and one outer insertion-connected component together.

In some embodiments, the first mounting component includes a first snap part, and each of the outer top plate of the outer insertion-connected component, the outer bottom plate of the outer insertion-connected component, the inner top plate and the inner bottom plate of the first inner insertion-connected component of the inner insertion-connected assembly adjacent to the outer insertion-connected component defines a first snap opening adapted to fit with the first snap part.

In some embodiments, the first mounting component has a second package edge adapted to fit with the outer side plate.

In some embodiments, the second mounting component includes a second snap part, and each of the inner top plate, the inner bottom plate, the outer top plate and the outer bottom plate has a second snap opening adapted to fit with the second snap part.

With the battery accommodating device according to embodiments of the present disclosure, by disposing the outer insertion-connected assembly including the first and second outer insertion-connected components, and the inner insertion-connected assemblies including the first and second inner insertion-connected components, the chamber for housing the battery is defined by adjacent inner insertion components and by the inner insertion-connected component and adjacent outer insertion-connected component, and the outer insertion-connected component and the inner insertion-connected component are fitted with the adjacent inner insertion-connected component via the sliding rail structure and detachably connected therewith respectively, thus the number of batteries can be extended easily with the battery accommodating device according to actual requirements.

Besides, since the outer insertion-connected component and the inner insertion-connected component are detachably connected with the adjacent inner insertion-connected component respectively, the assembling and disassembling of the battery accommodating device both are easy to be carried out, thus simplifying the assembling process and improving assembling efficiency thereof.

Further, the expansibility of the power battery module is improved, the R&D cost of the power battery module is decreased, and the time for development of the power battery module is shortened.

Embodiments of a second aspect the present disclosure provide a battery module. The battery module includes: a battery accommodating device according to above embodiments of the present disclosure, and at least one battery accommodated in a chamber of the battery accommodating device.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings, in which:
Fig. 1 is an exploded view of a battery module according to an embodiment of the present disclosure;
Fig. 2 is a partially exploded view of a battery accommodating device according to another embodiment of the present disclosure, which shows an assembling relationship of two outer insertion-connected components and one inner insertion-connected assembly;
Fig. 3 is a partially perspective view of a battery accommodating device according to another embodiment of the present disclosure, which shows an assembling relationship of one outer insertion-connected component and a plurality of inner insertion-connected components;
Fig. 4 is a perspective view of an outer insertion-connected component of a battery accommodating device according to an embodiment of the present disclosure;
Fig. 5 is a perspective view of an inner insertion-connected component of a battery accommodating device according to an embodiment of the present disclosure;
Fig. 6 is a perspective view of a protective cover disposed at an end of the outer insertion-connected component of a battery accommodating device according to an embodiment of the present disclosure;
Fig. 7 is a top view of two inner insertion-connected components of two adjacent inner insertion assemblies of a battery accommodating device according to an embodiment of the present disclosure;
Fig. 8 is a schematic view of the two inner insertion-connected components shown in Fig. 7 connected with each other via a second mounting component;
Fig. 9 is a perspective view from an angle of a first mounting component of a battery accommodating device according to an embodiment of the present disclosure;
Fig 10 is a perspective view from another angle of the first mounting component shown in Fig. 9;
Fig. 11 is a perspective view from an angle of a second mounting component of a battery accommodating device according to an embodiment of the present disclosure; and
Fig. 12 is a perspective view from another angle of the second mounting component shown in Fig. 11.

### DETAILED DESCRIPTION

Reference will be made in detail to embodiments of the present disclosure. The embodiments described herein with reference to the accompany drawings are explanatory and illustrative, in which the same or similar reference numerals throughout signify the same or similar components or components having the same or similar functions. The embodiments are used to generally understand the present disclosure, and shall not be construed to limit the present disclosure.

In the specification, unless specified or limited otherwise, it should be understood that, terms used to denote the position or positional relationship such as "upper", "lower", "front", "rear", "left", "right", "vertically", "horizontally", "top", "bottom", "inner", "outer" as well as derivative thereof should be construed to refer to the position or positional relationship as then described or as shown in the drawings. These relative terms are for convenience of description and do not require that the present disclosure be constructed or operated in a particular position. In additive, terms such as "first" and "second" are used herein for purposes of description and are not intended to indicate or imply relative importance or significance. Thereout, the features limited by "first" and "second" may indicate or imply that the number of the features is more than one. In the description of the present disclosure, unless specified or limited otherwise, "a plurality of' means two or more than two.

In the description of the present disclosure, unless specified or limited otherwise, it should be noted that, terms such as "fixed", "mounted", "connected" may be understood broadly, such as permanent connection, detachable connection, or integrally connection; direct connection or indirect connection via intermediary, inner communication or interreaction between two components. These having ordinary skills in the art should understand the specific meanings in the present disclosure according to specific situations.

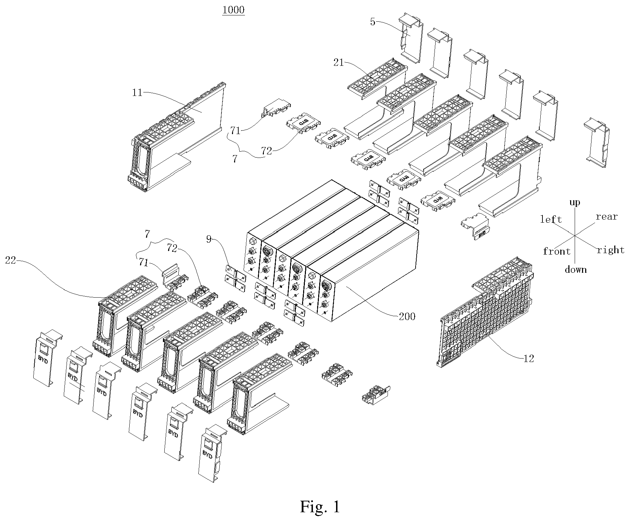

A battery accommodating device 100 according to embodiments of a first aspect of the present disclosure will be described in the following with reference to Figs. 1-12. Firstly, it should be explained that, the battery accommodating device 100 is used to accommodate a battery 200, thus obtaining a battery module 1000. Specifically, the battery accommodating device 100 according to embodiments of the present disclosure includes an outer insertion-connected assembly 1 and an inner insertion-connected assembly 2.

It should be noted that, in the description of the present disclosure below, terms used to denote the direction, such as "upper and lower", "front and rear", "left and right" as well as derivative thereof, should be construed to refer to the direction as then described or shown in the drawings. These relative terms are for convenience of exemplary description and do not require that the present disclosure be constructed or operated in a particular direction or position relationship.

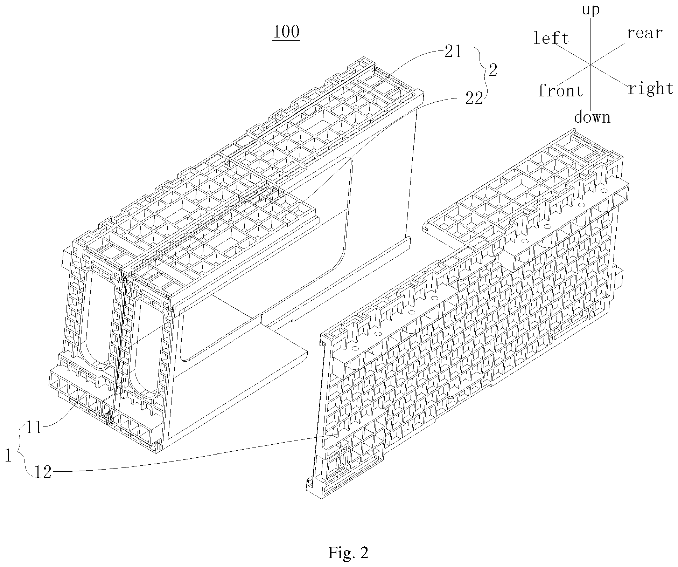

As shown in Figs. 1 and 2, the outer insertion-connected assembly 1 includes a first outer insertion-connected component 11 and a second outer insertion-connected components 12, and the first and second outer insertion-connected components 11, 12 are opposed to and spaced from each other in a right and left direction. The inner insertion-connected assembly 2 is disposed between the first and second outer insertion-connected components 11, 12 in the right and left direction. The inner insertion-connected assembly 2 includes a first inner insertion-connected component 21 and a second inner component 22 staggerly arranged with each other in a front and rear direction. A chamber for accommodate the battery 200 is defined between the inner insertion-connected component of the inner insertion-connected assembly 2 and adjacent one of the first and second outer insertion-connected components 11, 12. In addition, each of the first and second outer insertion-connected components 11, 12 is fitted with the first and second inner insertion-connected components 21, 22 via a sliding rail structure.

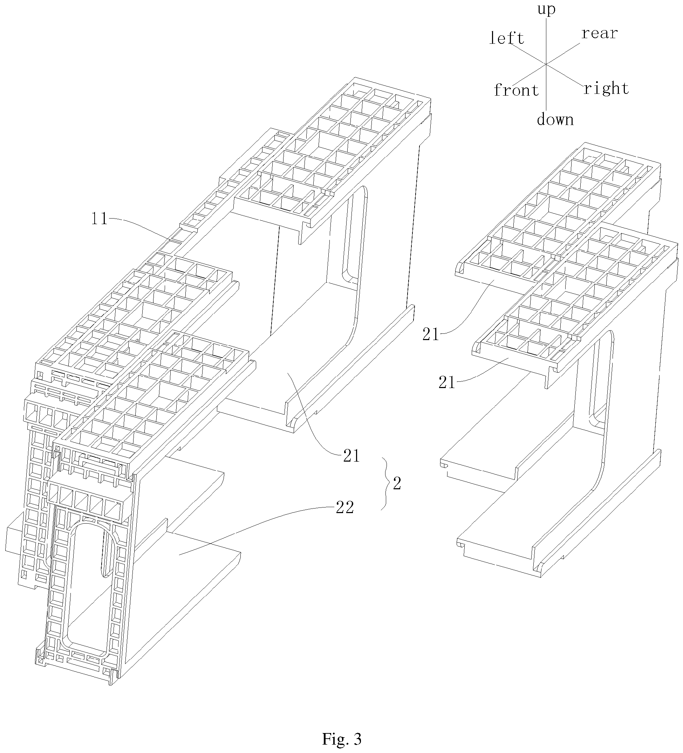

In another embodiment of the present disclosure, as shown in Fig. 3, a plurality of inner insertion-connected assemblies are disposed between the first and second outer insertion-connected components 11, 12. The chamber is further defined between adjacent inner insertion-connected assemblies, and the battery 200 is received in the chamber. In addition, the adjacent inner insertion-connected components are fitted with each other via the sliding rail structure.

Herein, it should be explained that, "the first and second inner insertion-connected components 21, 22 of the inner insertion-connected assembly 2 are staggerly arranged with each other in the front and rear direction" may indicate that, in the front and rear direction, the first and second inner insertion-connected components 21, 22 of the inner insertion-connected assembly 2 are not opposed to each other, but staggered to each other, which can be seen in Fig. 2.

The outer insertion-connected component and the inner insertion-connected component are detachably connected with adjacent inner insertion-connected component respectively.

With the battery accommodating device 100 according to embodiments of the present disclosure, by disposing the outer insertion-connected assembly 1 including the first and second outer insertion-connected components, and the inner insertion-connected assemblies 2 including the first and second inner insertion-connected components, the chamber for housing the battery is defined by adjacent inner insertion components and by the inner insertion-connected component and the adjacent outer insertion-connected component, and the outer insertion-connected component and the inner insertion-connected component are fitted with the adjacent inner insertion-connected component via the sliding rail structure and detachably connected therewith respectively, thus the number of batteries can be extended easily with the battery accommodating device 100 according to actual requirements.

Besides, since the outer insertion-connected component and the inner insertion-connected component are detachably connected with the adjacent inner insertion-connected component respectively, the assembling and disassembling of the battery accommodating device 100 both are easy to be carried out, thus simplifying the assembling process and improving assembling efficiency thereof.

Further, the expansibility of the power battery module 1000 is improved, the R&D cost of the power battery module 1000 is decreased, and the time for development of the power battery module 1000 is shortened.

In some embodiments, each of the first and second outer insertion-connected components 11, 12 has a sliding groove 3 or a sliding block 4. Each of the first and second inner insertion-connected components 21, 22 has a sliding groove 3 in a left side thereof and a sliding block 4 on a right side thereof. The sliding groove 3 of the inner insertion-connected component is adapted to fit with the sliding block 4 of the outer insertion-connected component or the sliding block 4 of an adjacent inner insertion-connected component. In other words, in the right and left direction, adjacent inner insertion-connected components are connected with each other via the sliding groove 3 and the sliding block 4, or the outer insertion-connected component and the adjacent inner insertion-connected component are connected with each other via the sliding groove 3 and sliding block 4, in which, the sliding groove 3 and the sliding block 4 both are components of the sliding rail structure.

The sliding groove 3 may be a groove structure, the sliding block 4 may be a continuous bar structure, or may be a discontinuous protrusion structure, as long as the sliding block 4 can slide within the sliding groove 3.

Alternatively, there may be no requirement to mount a connection structure between the first and second inner insertion-connected components 21, 22 of one inner insertion-connected assembly 2 which are staggered to each other. And these inner insertion-connected components may be connected with the adjacent inner insertion-connected components or outer insertion-connected components via an insertion connection, thus the structure of the first and second inner insertion-connected components 21, 22 of the inner insertion-connected assembly 2 is simplified, and the assembling and disassembling thereof are easy to be carried out.

The outer insertion-connected component of the battery accommodating device 100 according to the embodiments of the present disclosure will be described below with reference to Figs. 1 to 4. As shown in Figs. 1 to 4, the outer insertion-connected component includes an outer side plate 111 and an insertion-connected frame 112.

The outer side plate 111 has a plate shape. The outer side plate 111 of the outer insertion-connected components is disposed at an outermost side of the battery accommodating device 100, as shown in Fig. 1, the outer side plate 111 of the first outer insertion-connected component 11 is disposed at a left end of the battery accommodating device 100, and the other outer side plate 111 of the second outer insertion-connected component 12 is disposed at a right end of the battery accommodating device 100.

The outer side plate 111 includes a first plate segment 1111 and a second plate segment 1112, and the insertion-connected frame 112 is disposed on the first plate segment 1111 of the outer side plate 111. The first inner insertion-connected component 21 of the inner insertion-connected assembly 2 adjacent to the outer insertion-connected component, is connected with the second plate segment 1112 of the outer side plate 111 and opposed to the insertion-connected frame 112. Alternatively, the first inner insertion-connected component 21 of the inner insertion-connected assembly 2 adjacent to the outer insertion-connected component, is connected with the second plate segment 1112 of the outer side plate 111 via the sliding groove 3 and the sliding block 4. The second inner insertion-connected component 22 of the inner insertion-connected assembly 2 adjacent to the outer insertion-connected component, is connected with a side of the insertion-connected frame 112 away from the outer side plate. Alternatively, the second inner insertion-connected component 22 of the inner insertion-connected assembly 2 adjacent to the outer insertion-connected component, is connected with the insertion-connected frame 112 via the sliding groove 3 and the sliding block 4.

In some embodiments, as shown in Fig. 2, the chamber may be defined between the first outer insertion-connected component 11 and the first inner insertion-connected component 21 connected with the second plate segment 1112 of the first outer insertion-connected component 11, i.e., two chambers may be defined between two outer insertion-connected components and two inner insertion-connected components, thus two batteries 200 may be received in these two chambers. It should be understood that, the battery accommodating device 100 may accommodate more batteries 200 if the plurality of the inner insertion-connected assemblies 2 are provided, which fulfills the requirement of the expanding the battery module 1000 and facilitates the assembly and disassembly of the battery accommodating device 100.

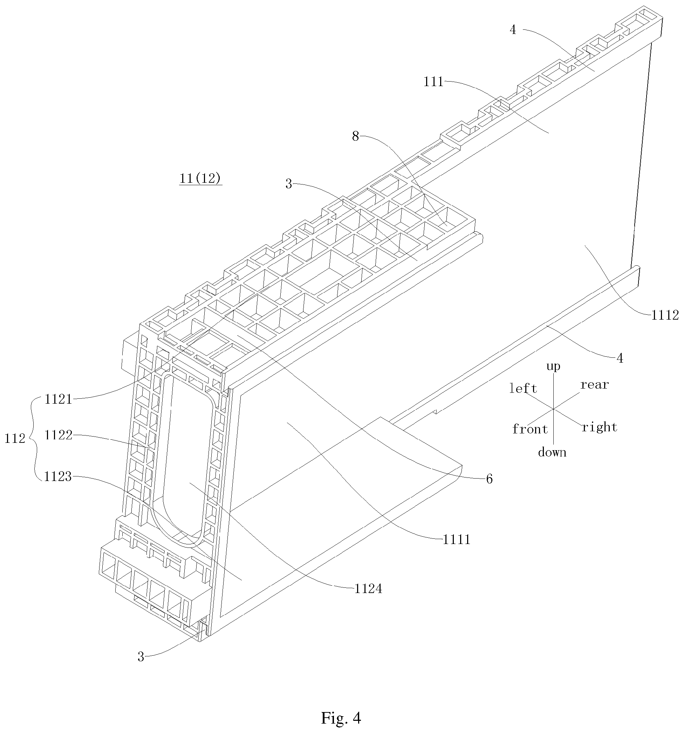

Furthermore, the insertion-connected frame 112 includes an outer top plate 1121, an outer end plate 1122, and an outer bottom plate 1123. The outer top plate 1121 is connected with a top of the outer side plate 111 (i.e., an upper part of the outer side plate 111 in Figs. 2 and 4) and perpendicular thereto, the outer end plate 1122 is connected with an end of the first plate segment 1111 of the outer side plate 111 away from the second plate segment 1112 and perpendicular thereto, the outer bottom plate 1123 is connected with a bottom of the outer side plate 111 and perpendicular thereto, and opposed to the outer top plate 1121. In other words, as shown in Fig. 4, the outer top plate of 1121 of the insertion-connected frame 112 is vertically connected with the top of the first plate segment 1111 of the outer side plate 111. The outer bottom plate 1123 of the insertion-connected frame 112 is vertically connected with the bottom of the first plate segment 1111 of the outer side plate 111, and opposed to the outer top plate 1121. The outer end plate 1122 is vertically connected with the end of the outer side plate 111 away from the second plate segment 1112, an upper end of the outer end plate 1122 is connected with the outer top plate 1121, and a lower end of the outer end plate 1122 is connected with the outer bottom plate 1123.

In some embodiments, alternatively, each of the outer top plate 1121 and the outer bottom plate 1123 may have a sliding groove 3 or a sliding block at a side thereof away from the outer side plate 111, and the sliding groove 3 or the sliding block 4 is adapted to fit with the second inner insertion-connected component 22 of the inner insertion-connected assembly 2 adjacent to the outer insertion-connected component. As shown in Fig. 4, each of the outer top plate 1121 and the outer bottom plate 1123 has the sliding groove at the side thereof away from the outer side plate 111, and the sliding groove 3 is adapted to fit with the second inner insertion-connected component 22 of the inner insertion-connected assembly 2 adjacent to the outer insertion-connected component, and the sliding groove 3 of the outer top plate 1121 is opened in a first direction opposite to a second direction in which the sliding groove 3 of the outer bottom plate 1123 is opened. In one embodiment, as shown in Fig. 4, the sliding groove 3 of the outer top plate 1121 is opened in an upward direction, while the sliding groove 3 of the outer bottom plate 1123 is opened in a downward direction.

Accordingly, the second inner insertion-connected component 22 fitted with the insertion-connected frame 112 of the outer insertion-connected component has a sliding block 4 in a corresponding position thereof, and the sliding block 4 of the second inner insertion-connected component 22 is adapted to fit within the sliding groove 3 of the insertion-connected frame 112 (i.e., the sliding grooves 3 of the outer top plate 1121 and the outer bottom plate 1123).

In some embodiments, the outer insertion-connected component and the adjacent inner insertion-connected component may be moved with respect to each other in the front and rear direction so as to assemble them together, i.e., the second inner insertion-connected component 22 may be moved by moving the sliding block 4 thereof within and along the sliding groove 3 of the outer insertion-connected component, until the second inner insertion-connected component 22 is completely mounted to the outer insertion-connected component, then the moving stopped. Preferably, the sliding groove 3 may be configured as a through structure in the front and rear direction, which further facilitates the mounting of the outer insertion-connected component and the adjacent inner insertion-connected component, thus the inner insertion-connected component can be mounted to the outer insertion-connected component via the insertion connection in a front or rear direction.

In some embodiments, the second plate segment 1112 of the outer side plate 111 has a sliding groove 3 or a sliding block 4 at a top and a bottom thereof respectively, and the sliding groove 3 or the sliding block 4 is adapted to fit with the first inner insertion-connected component 21 of the inner insertion-connected assembly 2 adjacent to the outer insertion-connected. As shown in Fig. 4, the second plate segment 1112 of the outer side plate 111 has the sliding block 4 at the top and the bottom thereof respectively, and the sliding block 4 is adapted to fit with the first inner insertion-connected component 21 of the inner insertion-connected assembly 2 adjacent to the outer insertion-connected component, and the sliding block 4 at the top of the second plate segment 1112 has an extending direction opposed to that of the sliding block 4 at the bottom of the second plate segment 1112. That is, as shown in Fig. 4, the sliding block 4 at the top of the second part 1112 has an downward extending direction, while the sliding block 4 at the bottom of the second part 1112 has an upward extending direction.

Accordingly, the first inner insertion-connected component 21 fitted with the second plate segment 1112 of the outer insertion-connected component has a sliding groove 3 in a corresponding position thereof, so that the first inner insertion-connected component 21 can be fitted with the second plate segment 1112 via the insertion connection.

In some embodiments, the outer end plate 1122 has a first extraction hole 1124 penetrated therethrough. It should be explained that, when the battery 200 is received within the chamber of the battery accommodating device 100, an electrode terminal of the battery 200 may be extended out of the chamber of the battery accommodating device 100 through the first extraction hole 1124 so as to achieve an electrical connection of the battery 200. Alternatively, the battery module 1000 further includes a plurality of connecting members 9 which are used to connect the batteries 200, i.e., the batteries 200 may be connected with each other in series or in parallel by the connecting members 9.

In some embodiments of the present disclosure, the battery accommodating device 100 further includes a plurality of protective covers 5, and the protective cover 5 is disposed at an end of the outer insertion-connected component adjacent to the outer end plate thereof. As shown in Fig. 1, the protective cover 5 is disposed on the outer insertion-connected component and closes the outer end plate 1122. As mentioned above, the first extraction hole 1124 is formed in the outer end plate 1122, thus the protective cover 5 may protect the electrode terminal of the battery 200 which is extended out through the first extraction hole 1124.

In some embodiments, the protective cover includes a cover body 51, and the cover body 51 has a plate shape. The outer top plate 1121 of the outer insertion-connected component defines a slot 6, and the protective cover 5 has a snap component 52 adapted to fit within the slot 6 at an upper end thereof (i.e., an upper end of the cover plate 51), so that the protective cover 5 may be detachably mounted on the outer insertion-connected component, thus facilitating the mounting and the dismounting thereof.

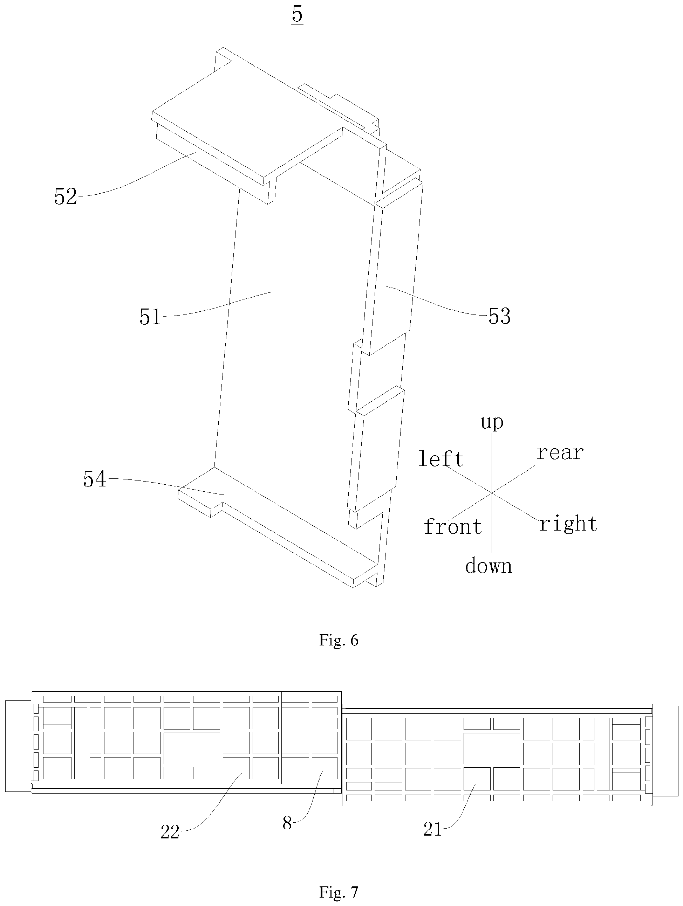

In some embodiments, the protective covers 5 disposed at the end of the outer insertion-connected component has a first package edge 53 adapted to fit with an outermost side of the outer insertion-connected component, as shown in Fig. 6, thus the first package edge 53 can protect the outermost side of the battery accommodating device 100 through the first package edge 53. Furthermore, the protective cover 5 has a flange 54 adapted to fit with the outer end plate 1122 or the inner end plate 212 at a lower end thereof, thus the mounting of the protective cover 5 can be more stable.

It should be noted that, structures of the first and second outer insertion-connected components 11, 12 are the same with each other, but assembling directions thereof are opposite when the first and second outer insertion-connected components 11, 12 are assembled. As shown in Figs. 1 and 2, the first outer insertion-connected component 11 is disposed at the left side, and the insertion-connected frame 112 of the first outer insertion-connected component 11 is disposed at a front side of the second plate segment 1112 of the outer side plate 111, while the second outer insertion-connected component 12 is disposed at the right side, and the insertion-connected frame 112 of the second outer insertion-connected component 12 is disposed at a rear side of the second plate segment 1112 of the outer side plate 111, thus simplifying the manufacturing process of the battery accommodating device 100 and reducing the manufacturing difficulty.

The inner insertion-connected component of the battery accommodating device according to the embodiments of the present disclosure will be described below with reference to Figs. 1 to 3 and Fig. 5. As shown in Figs. 1 to 3 and Fig. 5, the inner insertion-connected component includes: an inner top plate 211, an inner end plate 212, an inner bottom plate 213, and an inner baffle plate 214.

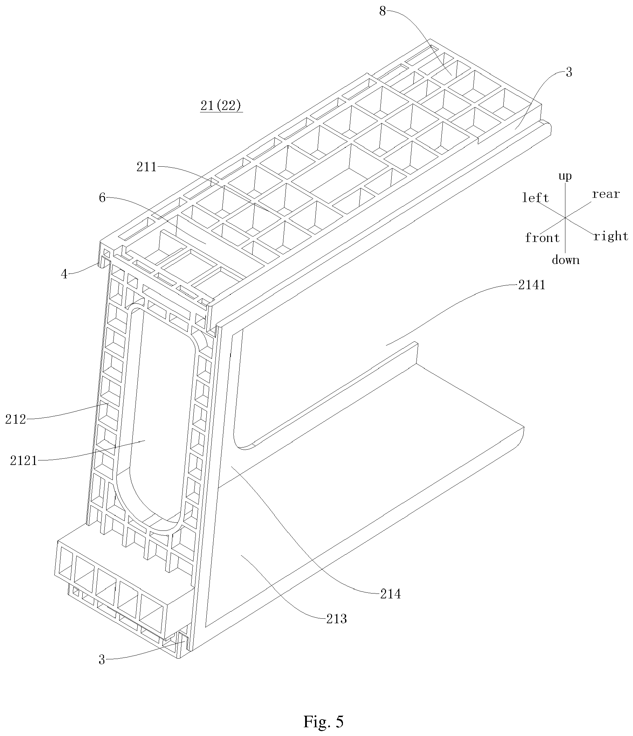

As shown in Fig. 5, the inner top plate 211 has a sliding groove 3 at a left side thereof and a sliding block 4 at a right side thereof, the sliding groove 3 and the sliding block 4 are adapted to fit with the outer insertion-connected component or the inner insertion-connected component adjacent thereto respectively. The inner bottom plate 213 is disposed below the inner top plate 211, and corresponding to the inner top plate 211. The inner bottom plate 213 also has a sliding groove 3 at a left side thereof and a sliding block 4 at a right side thereof, the sliding groove 3 and the sliding block 4 are adapted to fit with the outer insertion-connected component or the inner insertion-connected component adjacent thereto. The inner end plate 212 is disposed at a front end or a rear end of the inner top plate 211 and perpendicular thereto. In one embodiment, as shown in Fig. 5, the inner end plate 212 is disposed at the front end of the inner top plate 211 and perpendicular thereto. The inner bottom plate 213 is connected with a lower end of the end plate 212 and perpendicular thereto.

The inner baffle plate 214 is disposed on a left side or a right side of the inner top plate 211 and perpendicular thereto, and connected with both the inner end plate 212 and the inner bottom plate 213. In one embodiment, as shown in Fig. 5, the inner baffle plate 214 is disposed at the left side of the inner top plate 211, i.e., the inner baffle plate 214 has a upper end connected with the left end of the inner top plate 211 and a lower end connected with the left end of the inner bottom plate 213, and the inner baffle plate 214 further has a front end connected with the left end of the inner end plate 212.

As shown in Fig. 5, an extending direction of the sliding block 4 of the inner top plate 211 is opposite to that of the sliding block 4 of the inner bottom plate 213, and the sliding groove 3 of the inner top plate 211 is opened in a first direction opposite to a second direction in which the sliding groove 3 of the inner bottom plate 213 is opened.

In some embodiments, the inner baffle plate 214 has a notch 2141 therein, and the notch 2141 is opened in a direction away from the inner end plate 212. In this way, the notches 2141 of the first and second inner insertion-connected component 21, 22 which belong to the same inner insertion-connected assembly 2 can form a complete through hole when the notches 2141 are placed opposite to each other, as shown in Fig. 2. Thus, the battery 200 received in the chamber of the battery accommodating device 100 can be cooled by the ventilation and heat dissipation through the through hole. Preferably, an insulating plate may be disposed in a position in which the through hole is formed by the notches 2141 of the first and second inner insertion-connected components 21, 22 of the same inner insertion-connected assembly 2, so that the efficient insulation between adjacent batteries 200 can be ensured, thus improving the safety thereof.

It should be noted that, structures of all the inner insertion-connected components are the same with each other. In a preferable embodiment, each inner insertion-connected component has the sliding groove 3 at the left side and the sliding block 4 at the right side thereof respectively, so that the adjacent inner insertion-connected components can be reasonably connected and fitted with each other or the outer insertion-connected component can be reasonably connected and fitted with the adjacent inner insertion-connected components, when the battery accommodating device 100 is assembled.

In some embodiments, the first and second inner insertion-connected components 21, 22 of the same inner insertion-connected assembly 2 are mounted in opposite directions. As shown in Fig. 2, in the first and second inner insertion-connected components 21, 22 staggerly arranged with each other in the front and rear direction, the inner end plate 212 of the second inner insertion-connected component 22 disposed at the front side faces forward, and the inner end plate 212 of the first inner insertion-connected component 21 disposed at the rear side faces backward. Adjacent inner insertion assemblies 2 may be connected with each other through the sliding groove 3 and the sliding block 4, thus simplifying the manufacturing process of the battery accommodating device 100 and reducing the manufacturing difficulty.

Alternatively, the inner end plate 212 has a second extraction hole 2121 penetrated therethrough. And the electrode terminal of the battery 200 may be extended out of the chamber of the battery accommodating device 100 through the second extraction hole 2121 formed in the second extraction hole 2121, so as to achieve the connection in series or in parallel between the batteries 200.

Similarly, the protective cover 5 also may be disposed at an end of the inner insertion-connected component adjacent to the inner end plate 212 thereof. The protective cover 5 may also protect the electrode terminal of the battery 200, which is extended out through the second extraction hole 2121.

In some embodiments, the battery accommodating device 100 further includes a mounting assembly 7, which is used to connect the outer insertion-connected component with the adjacent inner insertion-connected component, or connect adjacent inner insertion-connected components with each other. By disposing the mounting assembly 7, both the connection stability of the outer insertion-connected component and the adjacent inner insertion-connected component, and the connection stability of the adjacent inner insertion-connected components are further improved.

In some embodiments, as shown in Fig. 1, the mounting assembly 7 includes a first mounting component 71 and a second mounting component 72. The first mounting component 71 is used to connect the outer insertion-connected component with the first inner insertion-connected component 21 of the inner insertion-connected assembly 2 adjacent to the outer insertion-connected component. The second mounting component 72 is used to connect four adjacent inner insertion-connected components together or adjacent three inner insertion-connected components and one outer insertion-connected component together. That is, the first mounting component 71 is used to connect the outer insertion-connected component disposed at the left or right end of the battery accommodating device 100 with the first inner insertion-connected component of the inner insertion-connected assembly 2 adjacent to this outer insertion-connected component, and the second mounting component 72 is used to connect four inner insertion-connected components disposed inside of the battery accommodating device 100 together or to connect the outer insertion-connected component disposed at the left or right end of the battery accommodating device 100 with three inner insertion-connected components, in which the three inner insertion-connected components as well as the outer insertion-connected component are adjacent with one another.

Alternatively, the first mounting component 71 and the second mounting component 72 may be disposed on bottom surfaces and/or top surfaces of the inner insertion-connected component and the outer insertion-connected component. Preferably, the second mounting component 72 may be disposed on the bottom surfaces and the top surfaces of the inner insertion-connected component and the outer insertion-connected component respectively, thus making the structure of the battery accommodating device 100 more stable.

For example, in the following description of the present disclosure, the second mounting component 72 is disposed on the bottom surfaces and the top surfaces of the inner insertion-connected component and the outer insertion-connected component respectively. But those skilled in the art should understand that, the second mounting component 72 may only be disposed on the bottom surfaces or the top surfaces of the inner insertion-connected component and the outer insertion-connected component, which also falls into the protection scope of the present disclosure.

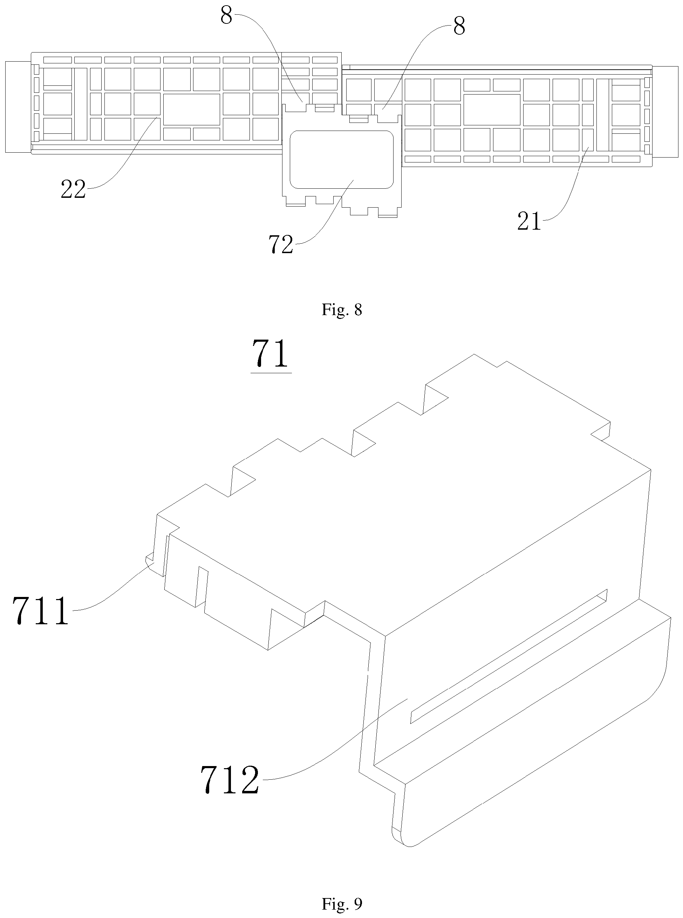

Fig. 7 is a top view of two inner insertion-connected components of two adjacent inner insertion assemblies 2 of a battery accommodating device 100 according to an embodiment of the present disclosure. Fig. 8 is a schematic view of the two inner insertion-connected components shown in Fig. 7 connected with each other via the second mounting component 72.

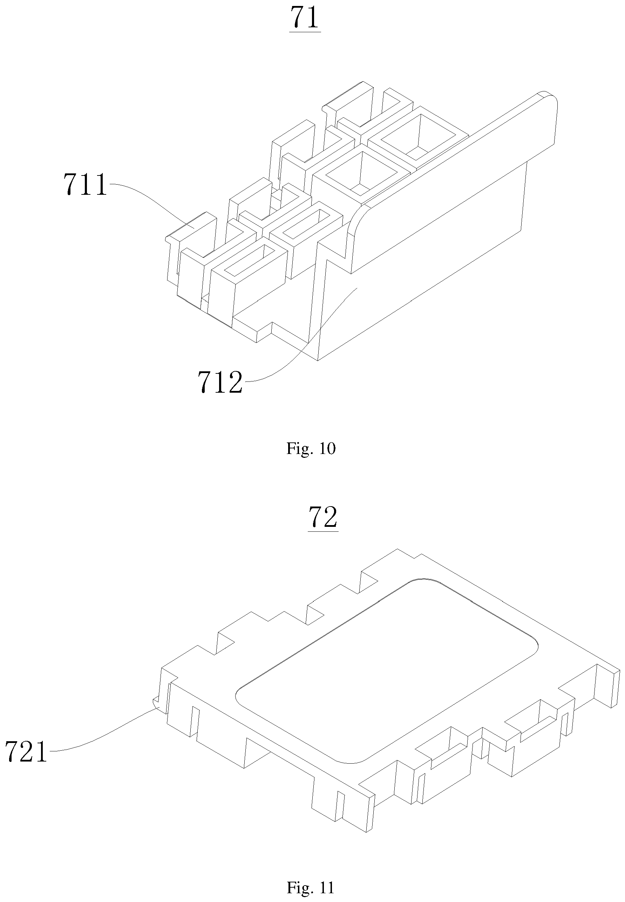

In some embodiments, as shown in Figs. 9 and 10, the first mounting component 71 has a substantially plate shape. And the first mounting component 71 includes a first snap part 711, and each of the outer top plate 1121 of the outer insertion-connected component, the outer bottom plate 1123 of the outer insertion-connected component, the inner top plate 212 and the inner bottom plate 213 of the first inner insertion-connected component 21 of the inner insertion-connected assembly adjacent to the outer insertion-connected component defines a first snap opening 8 adapted to fit with the first snap part 711. Thus, it is more convenient for the mounting of the first mounting component 71.

Further, the first mounting component 71 has a second package edge 712 adapted to fit with the outer side plate 111. Thus, the outermost side of the battery accommodating device 100 is protected by the second package edge 712.

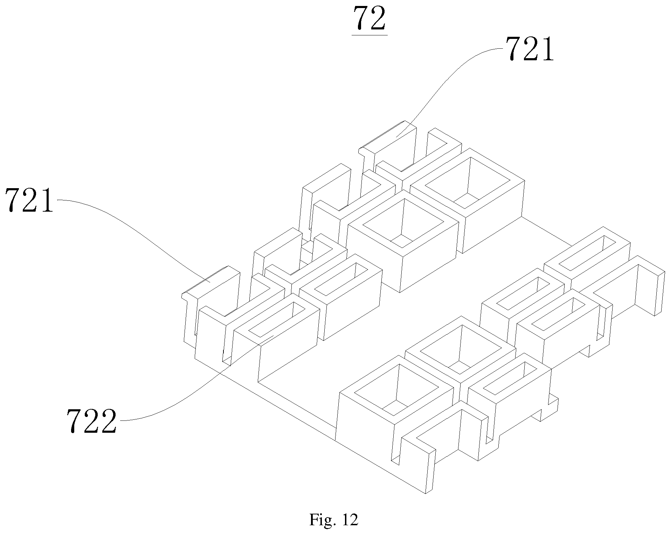

As shown in Figs. 11 and 12, the second mounting component 72 has a substantial plate shape. And the second mounting component 72 includes a second snap part 721, and each of the inner top plate 211, the inner bottom plate 213, the outer top plate 1121 and the outer bottom plate 1123 has a snap opening 8 adapted to fit with the second snap part 721. Thus, it is more convenient for the mounting of the second mounting component 72.

In some embodiments, the second mounting component 72 has a plate shape, as shown in Fig. 8, such that four adjacent inner insertion-connected components 21 or four adjacent inner insertion-connected components and outer insertion-connected components may be connected together by the second mounting component 72, thus resulting in a simple structure.

In a preferable embodiment, the second mounting component 72 has an insertion part 722 on a surface thereof adjacent to the inner insertion-connected components or the outer insertion-connected components. A structure of the insertion part 722 is matched with that of the snap opening 8. Thus, the insertion part 722 may be inserted into the snap opening 8, which makes the connection between the second mounting component 72 and the inner insertion-connected components or the outer insertion-connected components more stable. Advantageously, there may be a plurality of the insertion parts 722 and the snap openings 8, such that the connection stability thereof can be further improved.

A battery module 1000 according to embodiments of a second aspect of the present disclosure is provided. The battery module 1000 includes a battery accommodating device 100 according to above embodiments of the first aspect of the present disclosure, and at least one battery 200 accommodated in the chamber of the battery accommodating device 100. As mentioned above, since both the assembling and disassembling of the battery accommodating device 100 are easy to be carried out, the assembling process is simplified and the assembling efficiency is improved, the expansibility of the battery module 1000 is improved, the R&D cost of the battery module 1000 is reduced, and the time for development of the battery module 1000 is shortened.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that changes, alternatives, and modifications all falling into the scope of the claims.

## Claims

1. A battery accommodating device (100), comprising:
an outer insertion-connected assembly (1) comprising first and second outer insertion-connected components (11, 12) opposed to and spaced from each other in a right and left direction;
an inner insertion-connected assembly (2) disposed between the first and second outer insertion-connected components (11,12) in the right and left direction, and comprising first and second inner insertion-connected components (21, 22) and
a chamber configured to accommodate a battery
wherein each of the first and second outer insertion-connected components (11,12) is fitted with adjacent the first and second inner insertion-connected components (21,22) via a sliding rail structure, **characterized in that** the first and second inner insertion-connected components (21, 22) are staggerly arranged with each other in a front and rear direction and **in that** the chamber is defined between the inner insertion-connected component of the inner insertion-connected assembly (2) and adjacent one of the first and second outer insertion-connected components (11, 12).

2. The battery accommodating device of claim 1, wherein a plurality of inner insertion-connected assemblies are disposed between the first and second outer insertion-connected components (11,12), wherein the chamber is further defined between adjacent inner insertion-connected assemblies, and adjacent inner insertion-connected components (21,22) are fitted with each other via the sliding rail structure.

3. The battery accommodating device of claim 1 or 2, wherein each of the first and second outer insertion-connected components (11,12) has a sliding groove (3) or a sliding block (4); wherein each of the first and second inner insertion-connected components (21,22) has a sliding groove (3) in a left side thereof and a sliding block (4) on a right side thereof, wherein the sliding groove (3) of the inner insertion-connected component is adapted to fit with the sliding block (4) of the outer insertion-connected component or the sliding block (4) of an adjacent inner insertion-connected component.

4. The battery accommodating device of claim 3, wherein the outer insertion-connected component comprises:
an outer side plate having a first plate segment and a second plate segment; and
an insertion-connected frame disposed on the first plate segment of the outer side plate,
wherein the first inner insertion-connected component of the inner insertion-connected assembly adjacent to the outer insertion-connected component, is connected with the second plate segment of the outer side plate and opposed to the insertion-connected frame;
wherein the second inner insertion-connected component of the inner insertion-connected assembly adjacent to the outer insertion-connected component, is connected with a side of the insertion-connected frame away from the outer side plate,
wherein the insertion-connected frame preferably comprises:
an outer top plate connected with a top of the outer side plate and perpendicular thereto,
an outer end plate connected with an end of the first plate segment of the outer side plate away from the second plate segment and perpendicular thereto; and
an outer bottom plate connected with a bottom of the outer side plate and perpendicular thereto, and opposed to the outer top plate.

5. The battery accommodating device of claim 4, wherein each of the outer top plate and the outer bottom plate has a sliding groove or a sliding block at a side thereof away from the outer side plate, and the sliding groove or the sliding block is adapted to fit with the second inner insertion-connected component of the inner insertion-connected assembly adjacent to the outer insertion-connected component,
wherein each of the outer top plate and the outer bottom plate preferably has the sliding groove at the side thereof away from the outer side plate, and the sliding groove is preferably adapted to fit with the second inner insertion-connected component of the inner insertion-connected assembly adjacent to the outer insertion-connected component, and the sliding groove of the outer top plate is preferably opened in a first direction opposite to a second direction in which the sliding groove of the outer bottom plate is opened.

6. The battery accommodating device of claim 5, wherein the second plate segment of the outer side plate has a sliding groove or a sliding block at a top and a bottom thereof respectively, and the sliding groove or the sliding block is adapted to fit with the first inner insertion-connected component of the inner insertion-connected assembly adjacent to the outer insertion-connected component,
wherein the second plate segment of the outer side plate preferably has the sliding block at the top and the bottom thereof respectively, the sliding block is preferably adapted to fit with the first inner insertion-connected component of the inner insertion-connected assembly adjacent to the outer insertion-connected component, and the sliding block at the top of the second plate segment preferably has an extending direction opposed to that of the sliding block at the bottom of the second plate segment.

7. The battery accommodating device of claim 4, wherein the outer end plate defines a first extraction hole penetrated therethrough.

8. The battery accommodating device of claim 4, wherein the inner insertion-connected component comprises:
an inner top plate having a sliding groove at a left side thereof and a sliding block at a right side thereof, the sliding groove and the sliding block being adapted to fit with the outer insertion-connected component or the inner insertion-connected component adjacent thereto respectively;
an inner end plate disposed at a front end or a rear end of the inner top plate and perpendicular thereto;
an inner bottom plate disposed at a lower end of the inner end plate and perpendicular thereto, having a sliding groove at a left side thereof and a sliding block at a right side thereof, the sliding groove and the sliding block being adapted to fit with the outer insertion-connected component or the inner insertion-connected component adjacent thereto; and
an inner baffle plate disposed at the left side or the right side of the inner top plate and perpendicular thereto, and connected with the inner end plate and the inner bottom plate,
wherein the inner end plate preferably defines a second extraction hole penetrated therethrough and/or
wherein the inner baffle plate preferably defines a notch opened in a direction away from the inner end plate.

9. The battery accommodating device of claim 8, wherein an extending direction of the sliding block of the inner top plate is opposite to that of the sliding block of the inner bottom plate, and the sliding groove of the inner top plate is opened in a first direction opposite to a second direction in which the sliding groove of the inner bottom plate is opened.

10. The battery accommodating device of claim 8, further comprising a plurality of protective covers, wherein
the protective cover is disposed at an end of the inner insertion-connected component adjacent to the inner end plate thereof and/or an end of the outer insertion-connected component adjacent to the outer end plate thereof.

11. The battery accommodating device of claim 10, wherein the inner top plate of the inner insertion-connected component or the outer top plate of the outer insertion-connected component defines a slot;
the protective cover has a snap component adapted to fit within the slot at an upper end thereof, and a flange adapted to fit with the outer end plate or the inner end plate at a lower end thereof,
wherein the protective cover disposed at the end of the outer insertion-connected component preferably has a first package edge adapted to fit with an outermost side of the outer insertion-connected component.

12. The battery accommodating device of claim 8, further comprising a mounting assembly,
wherein the mounting assembly is configured to connect the outer insertion-connected component with the inner insertion-connected component adjacent thereto, or connect adjacent inner insertion-connected components with each other,
wherein the mounting assembly preferably comprises:
a first mounting component configured to connect the outer insertion-connected component with the first inner insertion-connected component of the inner insertion-connected assembly adjacent to the outer insertion-connected component; and
a second mounting component configured to connect four adjacent inner insertion-connected components together or adjacent three inner insertion-connected components and one outer insertion-connected component together.

13. The battery accommodating device of claim 12, wherein the first mounting component comprises a first snap part, and each of the outer top plate of the outer insertion-connected component, the outer bottom plate of the outer insertion-connected component, the inner top plate and the inner bottom plate of the first inner insertion-connected component of the inner insertion-connected assembly adjacent to the outer insertion-connected component defines a first snap opening adapted to fit with the first snap part,
wherein the first mounting component preferably has a second package edge adapted to fit with the outer side plate.

14. The battery accommodating device of claim 12, wherein the second mounting component comprises a second snap part, and each of the inner top plate, the inner bottom plate, the outer top plate and the outer bottom plate has a second snap opening adapted to fit with the second snap part.

15. A battery module, comprising:
a battery accommodating device according to any of claims 1 to 14, and
at least one battery accommodated in a chamber of the battery accommodating device.

## Patentansprüche

1. Batterieaufnahmeeinrichtung (100), umfassend:
eine äußere Einsatz-verbundene Anordnung (1), umfassend erste und zweite äußere Einsatz-verbundene Komponenten (11, 12) einander gegenüberliegend und in einer rechten und linken Richtung voneinander räumlich beabstandet;
eine innere Einsatz-verbundene Anordnung (2), angeordnet zwischen den ersten und zweiten äußeren Einsatz-verbundenen Komponenten (11, 12) in der rechten und linken Richtung, und umfassend erste und zweite innere Einsatz-verbundene Komponenten (21, 22) und
eine Kammer, konfiguriert, um eine Batterie aufzunehmen,
wobei jede der ersten und zweiten äußeren Einsatz-verbundenen Komponenten (11, 12) benachbart zu den ersten und zweiten inneren Einsatz-verbundenen Komponenten (21, 22) mittels einer gleitenden Schienenstruktur angepasst ist,
**dadurch gekennzeichnet, dass** die ersten und zweiten inneren Einsatz-verbundenen Komponenten (21, 22) versetzt miteinander in einer vorderen und hinteren Richtung angeordnet sind und dadurch, dass die Kammer zwischen der inneren Einsatz-verbundenen Komponente der inneren Einsatz-verbundenen Anordnung (2) und benachbart zu einem aus der ersten und zweiten äußeren Einsatz-verbundenen Komponenten (11, 12) definiert ist.

2. Batterieaufnahmeeinrichtung nach Anspruch 1, wobei eine Vielzahl von inneren Einsatz-verbundenen Anordnungen zwischen den ersten und zweiten äußeren Einsatz-verbundenen Komponenten (11, 12) angeordnet sind,
wobei die Kammer weiter zwischen benachbarten inneren Einsatz-verbundenen Anordnungen definiert ist und benachbarte innere Einsatz-verbundene Komponenten (21, 22) miteinander mittels der gleitenden Schienenstruktur angepasst sind.

3. Batterieaufnahmeeinrichtung nach Anspruch 1 oder 2, wobei jede der ersten und zweiten äußeren Einsatz-verbundenen Komponenten (11, 12) eine gleitende Nut (3) oder einen gleitenden Block (4) aufweist;
wobei jede der ersten und zweiten inneren Einsatz-verbundenen Komponenten (21, 22) eine gleitende Nut (3) in einer linken Seite davon und einen gleitenden Block (4) auf einer rechten Seite davon aufweist,
wobei die gleitende Nut (3) der inneren Einsatz-verbundenen Komponente geeignet ist, um zu dem gleitenden Block (4) der äußeren Einsatz-verbundenen Komponente oder dem gleitenden Block (4) einer benachbarten inneren Einsatz-verbundenen Komponente zu passen.

4. Batterieaufnahmeeinrichtung nach Anspruch 3, wobei die äußere Einsatz-verbundene Komponente umfasst:
eine äußere Seitenplatte, die ein erstes Plattensegment und ein zweites Plattensegment aufweist; und
einen Einsatz-verbundenen Rahmen, angeordnet an dem ersten Plattensegment der äußeren Seitenplatte,
wobei die erste innere Einsatz-verbundene Komponente der inneren Einsatz-verbundenen Anordnung benachbart zu der äußeren Einsatz-verbundenen Komponente, verbunden ist mit dem zweiten Plattensegment der äußeren Seitenplatte und gegenüberliegend zu dem Einsatz-verbundenen Rahmen;
wobei die zweite innere Einsatz-verbundene Komponente der inneren Einsatz-verbundenen Anordnung benachbart zu der äußeren Einsatz-verbundenen Komponente, verbunden ist mit einer Seite des Einsatz-verbundenen Rahmens entfernt von der äußeren Seitenplatte,
wobei der Einsatz-verbundene Rahmen vorzugsweise umfasst:
eine äußere Oberplatte, verbunden mit einem Oberteil der äußeren Seitenplatte und senkrecht dazu,
eine äußere Endplatte, verbunden mit einem Ende des ersten Plattensegments der äußeren Seitenplatte entfernt von dem zweiten Plattensegment und senkrecht dazu; und
eine äußere Bodenplatte, verbunden mit einem Boden der äußeren Seitenplatte und senkrecht dazu, und gegenüberliegend zu der äußeren Oberplatte.

5. Batterieaufnahmeeinrichtung nach Anspruch 4, wobei jede der äußeren Oberplatte und der äußeren Bodenplatte eine gleitende Nut oder einen gleitenden Block an einer Seite davon entfernt von der äußeren Seitenplatte aufweist, und wobei die gleitende Nut oder der gleitende Block geeignet ist, um zu der zweiten inneren Einsatz-verbundenen Komponente der inneren Einsatz-verbundenen Anordnung benachbart zu der äußeren Einsatz-verbundenen Komponente zu passen,
wobei jede der äußeren Oberplatte und der äußeren Bodenplatte vorzugsweise die gleitende Nut an der Seite davon entfernt von der äußeren Seitenplatte aufweist, und wobei die gleitende Nut vorzugsweise geeignet ist, um zu der zweiten inneren Einsatz-verbundenen Komponente der inneren Einsatz-verbundenen Anordnung benachbart zu der äußeren Einsatz-verbundenen Komponente zu passen, und wobei die gleitende Nut der äußeren Oberplatte vorzugsweise in einer ersten Richtung entgegengesetzt zu einer zweiten Richtung, in der die gleitende Nut der äußeren Bodenplatte geöffnet ist, geöffnet ist.

6. Batterieaufnahmeeinrichtung nach Anspruch 5, wobei das zweite Plattensegment der äußeren Seitenplatte eine gleitende Nut oder einen gleitenden Block an einem Oberteil und einem Boden davon entsprechend aufweist, und wobei die gleitende Nut oder der gleitende Block geeignet ist, um zu der ersten inneren Einsatz-verbundenen Komponente der inneren Einsatz-verbundenen Anordnung benachbart zu der äußeren Einsatz-verbundenen Komponente zu passen,
wobei das zweite Plattensegment der äußeren Seitenplatte vorzugsweise den gleitenden Block an dem Oberteil und dem Boden davon entsprechend aufweist, wobei der gleitende Block vorzugsweise geeignet ist, um zu der ersten inneren Einsatz-verbundenen Komponente der inneren Einsatz-verbundenen Anordnung benachbart zu der äußeren Einsatz-verbundenen Komponente zu passen, und wobei der gleitende Block an dem Oberteil des zweiten Plattensegments vorzugsweise eine Erstreckungsrichtung gegenüberliegend zu der des gleitenden Blocks an dem Boden des zweiten Plattensegments aufweist.

7. Batterieaufnahmeeinrichtung nach Anspruch 4, wobei die äußere Endplatte eine erste dadurch penetrierte Extraktionsöffnung definiert.

8. Batterieaufnahmeeinrichtung nach Anspruch 4, wobei die innere Einsatz-verbundene Komponente umfasst:
eine innere Oberplatte, die eine gleitende Nut an einer linken Seite davon und einen gleitenden Block an einer rechten Seite davon aufweist, wobei die gleitende Nut und der gleitende Block geeignet sind, um zu der äußeren Einsatz-verbundenen Komponente oder der inneren Einsatz-verbundenen Komponente entsprechend benachbart dazu zu passen;
eine innere Endplatte, angeordnet an einem Vorderende oder einem Hinterende der inneren Oberplatte und senkrecht dazu;
eine innere Bodenplatte, angeordnet an einem niedrigeren Ende der inneren Endplatte und senkrecht dazu, aufweisend eine gleitende Nut an einer linken Seite davon und einen gleitenden Block an einer rechten Seite davon, wobei die gleitende Nut und der gleitende Block geeignet sind, um zu der äußeren Einsatz-verbundenen Komponente oder der inneren Einsatz-verbundenen Komponente benachbart dazu zu passen; und
ein inneres Leitblech, angeordnet an der linken Seite oder der rechten Seite der inneren Oberplatte und senkrecht dazu, und verbunden mit der inneren Endplatte und der inneren Bodenplatte,
wobei die innere Endplatte vorzugsweise eine zweite dadurch penetrierte Extraktionsöffnung definiert und/oder
wobei das innere Leitblech vorzugsweise eine Aussparung definiert, die in eine Richtung weg von der inneren Endplatte geöffnet ist.

9. Batterieaufnahmeeinrichtung nach Anspruch 8, wobei eine Erstreckungsrichtung des gleitenden Blocks der inneren Oberplatte entgegengesetzt der des gleitenden Blocks der inneren Bodenplatte ist, und die gleitende Nut der inneren Oberplatte in einer ersten Richtung entgegengesetzt zu einer zweiten Richtung, in der die gleitende Nut der inneren Bodenplatte geöffnet ist, geöffnet ist.

10. Batterieaufnahmeeinrichtung nach Anspruch 8, weiter umfassend eine Vielzahl von Schutzabdeckungen, wobei
die Schutzabdeckung an einem Ende der inneren Einsatz-verbundenen Komponente benachbart zu der inneren Endplatte davon und/oder einem Ende der äußeren Einsatz-verbundenen Komponente benachbart zu der äußeren Endplatte davon angeordnet ist.

11. Batterieaufnahmeeinrichtung nach Anspruch 10, wobei die innere Oberplatte der inneren Einsatz-verbundenen Komponente oder die äußere Oberplatte der äußeren Einsatz-verbundenen Komponente einen Slot definiert;
wobei die Schutzabdeckung eine Schnappkomponente, geeignet, um zu dem Slot an einem oberen Ende davon zu passen, und einen Flansch, geeignet, um zu der äußeren Endplatte oder der inneren Endplatte an einem niedrigeren Ende davon zu passen, aufweist,
wobei die Schutzabdeckung, die an dem Ende der äußeren Einsatz-verbundenen Komponente angeordnet ist, vorzugsweise eine erste Paketkante, geeignet, um zu einer äußersten Seite der äußeren Einsatz-verbundenen Komponente zu passen, aufweist.

12. Batterieaufnahmeeinrichtung nach Anspruch 8, weiter umfassend eine Montageanordnung, wobei die Montageanordnung konfiguriert ist, um die äußere Einsatz-verbundene Komponente mit der inneren Einsatz-verbundenen Komponente benachbart dazu zu verbinden, oder benachbarte innere Einsatz-verbundene Komponenten miteinander zu verbinden,
wobei die Montageanordnung vorzugsweise umfasst:
eine erste Montagekomponente, konfiguriert, um die äußere Einsatz-verbundene Komponente mit der ersten inneren Einsatz-verbundenen Komponente der inneren Einsatz-verbundenen Anordnung benachbart mit der äußeren Einsatz-verbundenen Komponente zu verbinden; und
eine zweite Montagekomponente, konfiguriert, um vier benachbarte innere Einsatz-verbundene Komponenten miteinander oder benachbarte drei innere Einsatz-verbundene Komponenten und eine äußere Einsatz-verbundene Komponente miteinander zu verbinden.

13. Batterieaufnahmeeinrichtung nach Anspruch 12, wobei die erste Montagekomponente ein erstes Schnappteil umfasst, und wobei jede der äußeren Oberplatte der äußeren Einsatz-verbundenen Komponente, die äußere Bodenplatte der äußeren Einsatz-verbundenen Komponente, die innere Oberplatte und die innere Bodenplatte der ersten inneren Einsatz-verbundenen Komponente der inneren Einsatz-verbundenen Anordnung benachbart zu der äußeren Einsatz-verbundenen Komponente eine erste Schnappöffnung, geeignet, um zu dem ersten Schnappteil zu passen, definiert,
wobei die erste Montagekomponente vorzugsweise eine zweite Paketkante, geeignet, um zu der äußeren Seitenplatte zu passen, aufweist.

14. Batterieaufnahmeeinrichtung nach Anspruch 12, wobei die zweite Montagekomponente ein zweites Schnappteil umfasst, und jede der inneren Oberplatte, der inneren Bodenplatte, der äußeren Oberplatte und der äußeren Bodenplatten eine zweite Schnappöffnung aufweist, geeignet, um zu dem zweiten Schnappteil zu passen.

15. Batteriemodul, umfassend:
eine Batterieaufnahmeeinrichtung nach einem der Ansprüche 1 bis 14, und
mindestens eine Batterie, aufgenommen in einer Kammer der Batterieaufnahmeeinrichtung.

## Revendications

1. Dispositif de logement de batterie (100), comprenant :
un assemblage externe connecté par insertion (1) comprenant des premier et second composants externes connectés par insertion (11, 12) opposés et espacés l'un de l'autre dans une direction droite et gauche ;
un assemblage interne connecté par insertion (2) disposé entre les premier et second composants externes connectés par insertion (11, 12) dans la direction droite et gauche ; et comprenant
des premier et second composants internes connectés par insertion (21, 22) ; et
une chambre configurée pour loger une batterie ;
dans lequel chacun des premier et second composants externes connectés par insertion (11, 12) correspond en position adjacente avec les premier et second composants internes connectés par insertion (21, 22) via une structure de glissière ;
**caractérisé en ce que** les premier et second composants internes connectés par insertion (21, 22) sont arrangés de manière échelonnée l'un avec l'autre dans une direction avant et arrière, et **en ce que** la chambre est définie entre le composant interne connecté par insertion de l'assemblage interne connecté par insertion (2) et un adjacent des premier et second composants externes connectés par insertion (11, 12).

2. Dispositif de logement de batterie selon la revendication 1, dans lequel une pluralité d'assemblages internes connectés par insertion sont disposés entre les premier et second composants externes connectés par insertion (11, 12) ;
dans lequel la chambre est en outre définie entre des assemblages internes adjacents connectés par insertion, et des composants internes adjacents connectés par insertion (21, 22) correspondent l'un avec l'autre via la structure de glissière.

3. Dispositif de logement de batterie selon la revendication 1 ou 2, dans lequel chacun des premier et second composants externes connectés par insertion (11, 12) possède une rainure de glissement (3) ou un bloc de glissement (4) ;
dans lequel chacun des premier et second composants internes connectés par insertion (21, 22) possède une rainure de glissement (3) dans un côté gauche desdits composants et un bloc de glissement (4) dans un côté droit desdits composants ;
dans lequel la rainure de glissement (3) du composant interne connecté par insertion est conçue pour correspondre avec le bloc de glissement (4) du composant externe connecté par insertion ou le bloc de glissement (4) d'un composant interne adjacent connecté par insertion.

4. Dispositif de logement de batterie selon la revendication 3, dans lequel le composant externe connecté par insertion comprend :
une plaque latérale externe possédant un premier segment de plaque et un second segment de plaque ; et
un cadre connecté par insertion disposé sur le premier segment de plaque de la plaque latérale externe ;
dans lequel le premier composant interne connecté par insertion de l'assemblage interne connecté par insertion adjacent au composant externe connecté par insertion est connecté avec le second segment de plaque de la plaque latérale externe et opposé au cadre connecté par insertion ;
dans lequel le second composant interne connecté par insertion de l'assemblage interne connecté par insertion adjacent au composé externe connecté par insertion est connecté avec un côté du cadre connecté par insertion à l'écart de la plaque latérale externe ;
dans lequel le cadre connecté par insertion comprend de préférence :
une plaque supérieure externe connectée avec un sommet de la plaque latérale externe et perpendiculaire à cette dernière ;
une plaque terminale externe connectée avec une extrémité du premier segment de plaque de la plaque latérale externe à l'écart du second segment de plaque et perpendiculaire à ce dernier ; et
une plaque inférieure externe connectée avec une base de la plaque latérale externe et perpendiculaire à cette dernière, et opposée à la plaque supérieure externe.

5. Dispositif de logement de batterie selon la revendication 4, dans lequel chacune de la plaque supérieure externe et de la plaque inférieure externe possède une rainure de glissement ou un bloc de glissement à un côté de ladite plaque qui s'écarte de la plaque latérale externe, et la rainure de glissement ou le bloc de glissement est conçu pour correspondre avec le second composant interne connecté par insertion de l'assemblage interne connecté par insertion adjacent au composant externe connecté par insertion ;
dans lequel chacune de la plaque supérieure externe et de la plaque inférieure externe de préférence possède la rainure de glissement au côté de ladite plaque à l'écart de la plaque latérale externe et la rainure de glissement est de préférence conçue pour correspondre avec le second composant interne connecté par insertion de l'assemblage interne connecté par insertion adjacent au composant externe connecté par insertion, et la rainure de glissement de la plaque supérieure externe est de préférence ouverte dans une première direction opposée à une seconde direction dans laquelle la rainure de glissement de la plaque inférieure externe est ouverte.

6. Dispositif de logement de batterie selon la revendication 5, dans lequel le second segment de plaque de la plaque latérale externe possède une rainure de glissement ou un bloc de glissement à un sommet et à une base dudit segment, respectivement, et la rainure de glissement ou le bloc de glissement est conçu pour correspondre avec le premier composant interne connecté par insertion de l'assemblage interne connecté par insertion adjacent au composant externe connecté par insertion ;
dans lequel le second segment de plaque de la plaque latérale externe possède de préférence le bloc de glissement à son sommet et à sa base, respectivement, le bloc de glissement est de préférence conçu pour correspondre avec le premier composant interne connecté par insertion de l'assemblage interne connecté par insertion adjacent au composant externe connecté par insertion, et le bloc de glissement au sommet du second segment de plaque possède de préférence une direction d'extension opposée à celle du bloc de glissement à la base du second segment de plaque.

7. Dispositif de logement de batterie selon la revendication 4, dans lequel la plaque terminale externe définit un premier trou d'extraction qui la traverse.

8. Dispositif de logement de batterie selon la revendication 4, dans lequel le composant interne connecté par insertion comprend :
une plaque supérieure interne possédant une rainure de glissement sur à un côté gauche de ladite plaque et un bloc de glissement à un côté droit de ladite plaque, la rainure de glissement et le bloc de glissement étant conçus pour correspondre avec le composant externe connecté par insertion ou le composant interne connecté par insertion, qui lui est adjacent, respectivement ;
une plaque terminale interne disposée à une extrémité avant ou à une extrémité arrière de la plaque supérieure interne et perpendiculairement à cette dernière ;
une plaque inférieure interne disposée à une extrémité inférieure de la plaque terminale interne et perpendiculairement à cette dernière, possédant une rainure de glissement à un côté gauche de ladite plaque et un bloc de glissement à un côté droit de ladite plaque, la rainure de glissement et le bloc de glissement étant conçus pour correspondre avec le composant externe connecté par insertion ou le composant interne connecté par insertion, qui lui est adjacent ; et
une plaque déflectrice interne disposée au côté gauche ou au côté droit de la plaque supérieure interne et perpendiculaire à cette dernière, et connectée avec la plaque terminale interne et la plaque inférieure interne ;
dans lequel la plaque terminale interne définit de préférence un second trou d'extraction qui la traverse et/ou
dans lequel la plaque déflectrice interne définit de préférence une encoche ouverte dans une direction qui s'écarte de la plaque terminale interne.

9. Dispositif de logement de batterie selon la revendication 8, dans lequel une direction d'extension du bloc de glissement de la plaque supérieure interne est opposée à celle du bloc de glissement de la plaque inférieure interne, et la rainure de glissement de la plaque supérieure interne est ouverte dans une première direction opposée à une seconde direction dans laquelle la rainure de glissement de la plaque inférieure interne est ouverte.

10. Dispositif de logement de batterie selon la revendication 8, comprenant en outre une pluralité de revêtements protecteurs, dans lequel
le revêtement protecteur est disposé à une extrémité du composant interne connecté par insertion, adjacente à la plaque terminale interne dudit composant et/ou à une extrémité du composant interne connecté par insertion, adjacente à la plaque terminale externe dudit composant.

11. Dispositif de logement de batterie selon la revendication 10, dans lequel la plaque supérieure interne du composant interne connecté par insertion ou la plaque supérieure externe du composant externe connecté par insertion définit une fente ;
le revêtement protecteur possède un composant d'encliquetage conçu pour s'insérer dans la fente à une extrémité supérieure dudit composant et une bride conçue pour correspondre avec la plaque terminale externe ou la plaque terminale interne à une extrémité inférieure dudit composant ;
dans lequel le revêtement protecteur disposé à l'extrémité du composant externe connecté par insertion possède de préférence un premier bord de conditionnement conçu pour correspondre avec un côté le plus externe du composant externe connecté par insertion.

12. Dispositif de logement de batterie selon la revendication 8, comprenant en outre un assemblage de montage, dans lequel l'assemblage de montage est configuré pour connecter le composant externe connecté par insertion avec le composant interne connecté par insertion, qui lui est adjacent, ou pour connecter l'un avec l'autre des composants internes adjacents connectés par insertion ;
dans lequel l'assemblage de montage comprend de préférence :
un premier composant de montage configuré pour connecter le composant externe connecté par insertion avec le premier composant interne connecté par insertion de l'assemblage interne connecté par insertion adjacent au composant externe connecté par insertion ; et
un second composant de montage configuré pour connecter les uns aux autres quatre composants internes adjacents connectés par insertion ou les uns aux autres trois composants internes adjacents connectés par insertion et un composant externe connecté par insertion.

13. Dispositif de logement de batterie selon la revendication 12, dans lequel le premier composant de montage comprend une première partie d'encliquetage, et chacun de la plaque supérieure externe du composant externe connecté par insertion, de la plaque inférieure externe du composant externe connecté par insertion, de la plaque supérieure interne et de la plaque inférieure interne du premier composant interne connecté par insertion de l'assemblage interne connecté par insertion adjacent au composant externe connecté par insertion définit une première ouverture d'encliquetage conçue pour correspondre avec la première partie encliquetage ;
dans lequel le premier composant de montage possède de préférence un second bord de conditionnement conçu pour correspondre avec la plaque latérale externe.

14. Dispositif de logement de batterie selon la revendication 12, dans lequel le second composant de montage comprend une seconde partie d'encliquetage, et chacune de la plaque supérieure interne, de la plaque inférieure interne, de la plaque supérieure externe et la plaque inférieure externe possède une seconde ouverture d'encliquetage conçue pour correspondre avec la seconde partie d'encliquetage.

15. Batterie modulaire, comprenant :
un dispositif de logement de batterie selon l'une quelconque des revendications 1 à 14 ; et
au moins une batterie logée dans une chambre du dispositif de logement de batterie.
